# FASCICULE DE BREVET EUROPEEN

(11) **EP 1 712 420 B1**
(45) Date de publication et mention de la délivrance du brevet: **02.12.2009**
(21) Numéro de dépôt: 06405119.6
(22) Date de dépôt: 17.03.2006
(51) Int. Cl.: B60R 9/058, B60R 9/045

(54) **Barre pour etre fixée sur un toit d'un véhicule automobile**
Querstange zum Befestigen auf einem Kraftfahrzeugdach
Transverse bar suitable for being attached to the roof of an automotive vehicle

(30) Priorité: 12.04.2005 FR 0503641
(43) Date de publication de la demande: 18.10.2006
(73) Titulaire: Scambia Industrial Developments AG, 9494 Schaan (LI)
(72) Inventeur: Poullet, Serge, 77170 Brie Comte Robert (FR)
(74) Mandataire: Braun, André jr.

(56) Documents cités:
- EP-A- 0 694 441
- WO-A-95/32105
- DE-U1- 29 724 613
- FR-A- 2 033 753
- FR-A- 2 135 773
- FR-A- 2 723 046
- FR-A- 2 807 722
- LU-A- 36 033
- US-A- 5 839 615
- US-A- 6 010 048

## Description

L'invention concerne une barre pour être fixée sur un toit d'un véhicule automobile. Plus en détail, l'invention se rapporte à une barre pour être fixée sur un toit d'un véhicule automobile, notamment d'une camionnette et/ou d'une voiture particulière, avec une traverse et deux pieds reliés à la traverse selon le préambule de la revendication 1.

Des véhicules automobiles, tels que des camionnettes et/ou des voitures particulières, peuvent souvent être pourvus d'un porte-charge ayant au moins une barre fixée au sens transversal sur le toit du véhicule. La ou chaque barre a deux pieds dont chacun repose avec l'extrémité inférieure sur le toit et est fixé au toit à l'aide d'une vis vissée dans un trou taraudé du toit.

La position d'un véhicule automobile, où celui-ci se trouve sur une surface plate et horizontale, est désignée ci-après comme position normale du véhicule automobile.
Dans la position normale d'un véhicule automobile, les sections de surface du toit prévues pour supporter un pied peuvent être, dans des coupes transversales, horizontales ou plus ou moins inclinées en dépendance de la section de surface considérée et de la forme du toit du type de véhicule considéré.

De plus, les axes des trous taraudés du toit du véhicule peuvent avoir des directions différentes en dépendance du trou considéré et du type de véhicule considéré. Les barres connues doivent donc souvent être pourvues avec des pieds différents pour les différentes places de montage et pour les différents types de véhicules. Cela agrandit les frais de fabrication et rend le montage des barres plus compliqué.

Les documents US 6 010 048 A, FR 2 723 046 A, EP 0 694 441 A, DE 297 24 613 U et US 5 839 615 A révèlent des porte-charges avec des barres de toit et des moyens de fixation pour fixer les barres au toit d'un véhicule automobile. Chaque barre comporte une traverse essentiellement droite et deux pieds. Les moyens de fixation comportent des cales ou des rails avec une surface portante qui est arquée et convexe ou concave. Chaque pied comprend un organe de liaison qui est relié à la traverse de la barre et qui présente une surface d'appui arquée. L'organe de liaison prend appui avec sa surface d'appui sur la surface portante d'une cale ou d'un rail de manière à ce que l'organe de liaison puisse être pivoté par rapport à la cale ou au rail présentant la surface portante arquée.

Les barres de toit révélées dans lesdits documents présentent une partie qui est formée par la traverse et éventuellement par des tronçons des pieds et qui est essentiellement droite ainsi qu'au moins presque lisse sur son côté supérieur sur toute sa longueur. Cela engendre le risque qu'une charge portée d'une barre ou de plusieurs barres peut glisser vers un des côtés du véhicule au-delà d'une extrémité de la ou chaque barre servant à porter la charge. Les barres connues desdits documents ont en plus l'inconvénient que le niveau de la traverse ne peut pas être ajusté par rapport au toit du véhicule. Cela a pour conséquence que ledit niveau ne peut ni être adapté à des toits ayant des formes différentes, ni à des charges fixées de façons différentes.

Il y a aussi des barres avec deux pieds dont chacun a une pièce d'appui appuyée sur la surface supérieure du toit d'un véhicule automobile et une patte en forme de crochet qui saisit un des bords du toit. Des barres serrées de cette manière au toit ont cependant souvent l'inconvénient que les pieds peuvent glisser le long du véhicule, si les barres portent des charges lourdes et si le véhicule est soumis à des chocs. En plus, des barres de ce type, tout comme les barres connues et déjà décrites auparavant, ont souvent l'inconvénient qu'elles doivent être équipées de pieds différents pour différentes places de montage et pour différents types de véhicules.

Le document FR 2 033 753 A révèle un porte-charge avec deux barres de toit. Chacune de ces barres comporte une traverse droite et, à chaque extrémité de celle-ci, un pied avec une glissière et une patte. Chaque glissière est coudée et possède une première branche ainsi qu'une deuxième branche. La première branche est fixée au côté inférieur de la traverse. La deuxième branche est dirigée de la traverse vers le bas et présente quatre trous alignés. Chaque patte a une pièce intérieure et une pièce extérieure. La pièce intérieure a trois trous alignés de manière à ce que la deuxième branche de la glissière puisse être fixée à l'aide de deux vis à différents niveaux à la pièce intérieure de la patte. La pièce extérieure de la patte présente un trou oblong et, à son extrémité inférieure, un crochet. La pièce extérieure peut être attachée à l'aide d'une vis et d'un écrou à la pièce intérieure de la patte. Le porte-charge possède en plus un cadre qui peut être fixé par boulonnage aux deux barres de toit décrites ci-dessus.

La fixation des barres au toit d'un véhicule n'est pas révélée dans le document FR 2 033 753 A. Il semble pourtant probable que la pièce intérieure de la patte soit appuyée sur le toit et que le crochet de la pièce extérieure de la patte saisisse le côté inférieur d'un rebord du toit et que la pièce extérieure soit ensuite ajustée ainsi que fixée à la pièce intérieure à l'aide de la vis passant à travers le trou oblong de la pièce extérieure, de sorte que la patte soit serrée au toit. Le porte-charge connu du dernier document mentionné a donc vraisemblablement le désavantage que les pieds peuvent glisser le long du véhicule si les barres portent une charge et si le véhicule est soumis à un choc causé, par exemple, par un freinage abrupt ou une collision.

Le porte-charge connu du document FR 2 033 753 A peut être utilisé avec ou sans le cadre mentionné. L'utilisation sans le cadre engendre le désavantage qu'une charge fixée sur les barres peut glisser au delà d'une extrémité des barres. Si l'utilisation du cadre est envisagée, cela engendre l'inconvénient qu'il est relativement laborieux et exige beaucoup de temps pour le monter sur le toit, pour l'attacher aux barres de toit et pour le démonter après utilisation. Le cadre est, en plus, assez encombrant et augmente, dans l'état monté, le poids se trouvant sur le toit. Le porte-charge connu du document FR 2 033 753 A présente, en plus, l'inconvénient que les vis traversant des trous de la glissière et de la pièce intérieure de la patte doivent être déplacées dans d'autres trous pour ajuster le niveau de la traverse, et que ce niveau ne peut être ajusté que pas à pas.

La présente invention a pour but de fournir une barre qui permet d'éliminer au moins une partie des inconvénients susmentionnés des barres connues. Il est en particulier aspiré à créer une barre ayant des pieds qui peuvent être fixés de façon solide au choix à différentes places de montage d'un toit d'un véhicule automobile ainsi que sur des toits avec des formes différentes. En outre, il est désiré pouvoir fabriquer la barre de façon économique et de diminuer le risque qu'une charge portée sur le véhicule par au moins une barre glisse vers un des côtés du véhicule au-delà d'une des extrémités de la barre.

Selon l'invention, ce but est atteint par une barre avec les caractéristiques de la revendication 1.

Selon l'invention, la traverse de la barre supporte donc, à chacune de ses extrémités, un arrêt charge avec une saillie faisant saillie dans une direction transversale de la traverse. En plus, chacun des deux arrêts charge est pivotant et configuré pour être bloqué dans une position d'arrêt où la saillie est dirigée vers le haut et pour être pivoté et bloqué dans au moins une autre position où la saillie est dirigée vers le bas ou vers un des côtés de la traverse.

Des formes de réalisation avantageuses de la barre ressortent des revendications dépendantes.

Par exemple, la barre est par surcroît caractérisée en ce que la cale de chaque pied comprend un trou, que chaque pied comprend des moyens de fixation, que les moyens de fixation comportent au moins une vis qui pénètre à travers le ou un trou de la cale et est formée pour être vissée dans un trou taraudé d'un élément de retenue arrangé au côté supérieur du toit ou que les moyens de fixation comportent au moins un écrou formé pour être vissé sur un boulon qui a un filet extérieur, est fixé au côté supérieur du toit et pénètre le ou un trou de la cale.

Dans une forme préférée de réalisation, la barre est aussi caractérisée en ce que la surface portante de la cale et la surface d'appui de l'organe de liaison forment des sections de surfaces cylindriques et que la surface portante définit un axe de pivot arrangé pour s'étendre au moins approximativement dans la direction longitudinale du toit si le pied est fixé sur le toit.

De préférence, la barre est en outre caractérisée en ce que l'organe de liaison possède une patte fixée à la cale et un support qui est fixé à la traverse et relié à la patte de façon ajustable par au moins un organe de connexion et, par exemple, par deux organes de connexion, que le ou chaque organe de connexion comporte une vis avec une tête et avec un boulon ayant un filet extérieur ou que le ou chaque organe de connexion comporte un boulon avec un filet extérieur et un écrou vissé sur le boulon, que le boulon de l'organe de connexion ou de chaque organe de connexion possède une section de boulon qui pénètre à travers un trou de la patte ou du support, que ce trou a, au moins dans une direction, une dimension qui est plus grande que la dimension transversale de ladite section de boulon mesurée dans la même direction de manière à ce que le boulon puisse être déplacé dans une direction sensiblement transversale à lui-même pour ajuster le support par rapport à la patte si l'organe de connexion ou chaque organe de connexion reliant le support à la patte est desserré.

Avantageusement, la barre est aussi caractérisée en ce que le niveau du support mesuré à partir de la cale est ajustable par rapport à la patte, que la patte et le support se contactent avec des surfaces de contact si le support est fixé à la patte, que ledit trou ou chacun desdits trous de la patte ou du support est arrangé dans une rampe de la patte ou du support, respectivement, que la rampe présente une surface de rampe, que la tête ou l'écrou de l'organe de connexion ou de chaque organe de connexion prend appui contre la surface de rampe et que la surface de rampe est inclinée par rapport aux surfaces de contact du haut en bas de manière à ce que la surface de rampe s'éloigne de haut vers le bas des surfaces de contact si la rampe appartient à la patte ou que la surface de rampe s'éloigne des surfaces de contact si la rampe appartient au support.

Avantageusement, la barre est en plus caractérisée en ce que le support est formé pour être pivoté, lors d'un ajustage, relatif à la patte autour d'un axe qui est sensiblement perpendiculaire aux surfaces de contact.

Avantageusement, la barre est aussi caractérisée en ce que chaque arrêt charge comprend une pièce principale, une palette de verrouillage supportée de façon mobile, par exemple de façon pivotante, par la pièce principale et au moins un ressort prenant appui sur la pièce principale et la palette de verrouillage et que la traverse, la pièce principale et la palette de verrouillage sont configurées de sorte que la palette de verrouillage puisse s'encliqueter dans la traverse lorsque l'arrêt charge se trouve dans ladite position d'arrêt ou dans ladite au moins une autre position et puisse être déclenchée contre la force appliquée du ressort ou des ressorts.

Un exemple de réalisation de l'invention est décrit ci-après à l'appui des dessins. Sur ces dessins
la figure 1 est une coupe verticale d'une partie d'une barre ayant un pied fixé sur le toit d'un véhicule automobile,
la figure 2 est une partie de la coupe représentée sur la figure 1 à plus grande échelle que la figure 1,
la figure 3 est une coupe similaire à celle représentée sur la figure 2, mais avec un pied fixé sur une autre partie du toit ou sur un autre toit,
la figure 4 est une vue oblique sur un élément de retenue du toit,
la figure 5 est une vue oblique sur la cale d'un pied,
la figure 6 est une vue oblique sur la semelle du pied,
la figure 7 est une vue oblique sur la patte du pied,
la figure 8 est une vue oblique sur le capot du pied,
la figure 9 est une vue oblique sur le support du pied,
la figure 10 est une coupe verticale et étagée d'une partie d'un pied à travers une des rampes de la patte et à travers un des doigts de la semelle, le support du pied étant déplacé à un niveau au-dessus du niveau représenté sur les figures 1 et 2,
la figure 11 et une vue de face sur l'arrêt charge arrangé à une des extrémités de la barre,
la figure 12 est une coupe suivant la ligne XII - XII de

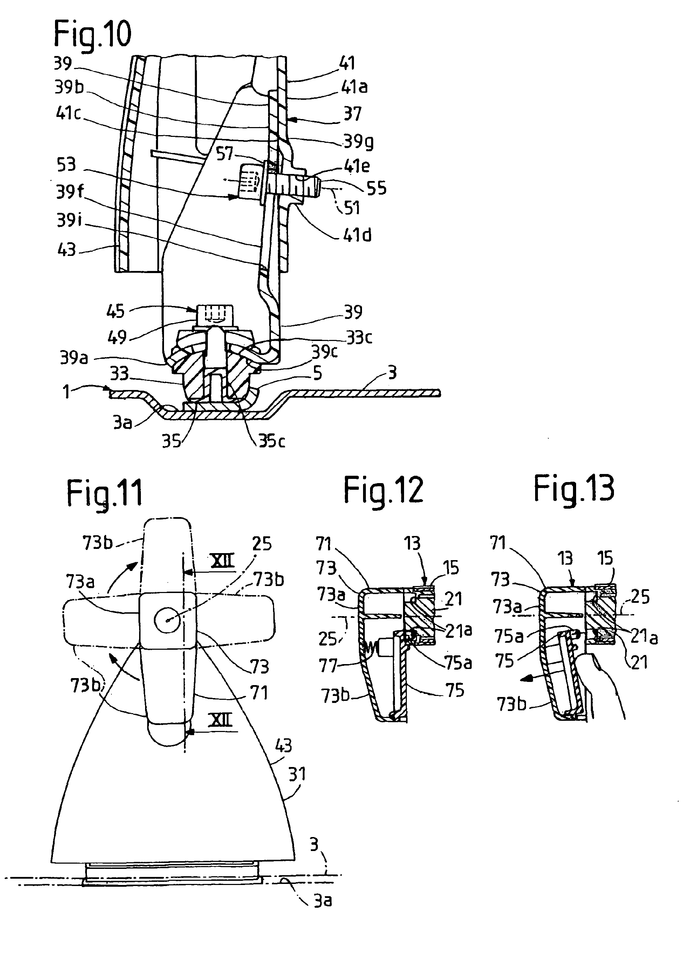

la figure 11 à travers une section d'extrémité de la barre et
la figure 13 est une coupe analogue à celle de la figure 12, mais la palette de verrouillage de l'arrêt charge étant déclenchée.

Il soit encore remarqué à propos des dessins que certaines figures, notamment les figures 10 à 13, sont quelque peu simplifiées et schématisées.

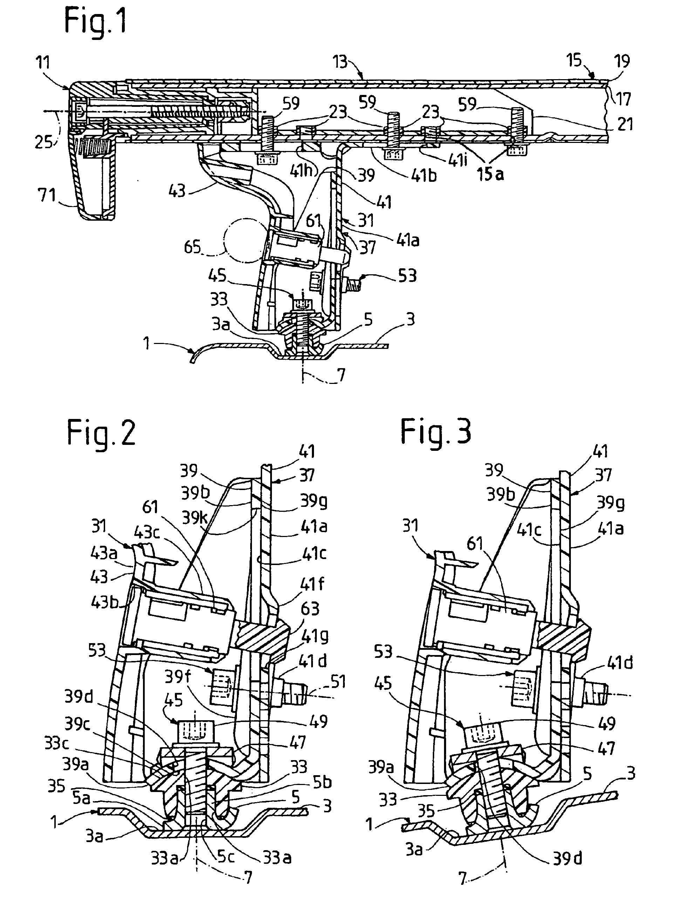

Un véhicule automobile 1, tel qu'une camionnette et/ou éventuellement une voiture particulière, comporte un toit 3 partiellement dessiné sur les figures 1, 2 et 3. Le toit 3 possède comme élément principal, une plaque en métal avec deux rainures 3a s'étendant à peu près dans la direction longitudinale du véhicule automobile le long des bordures du toit. Chaque rainure 3a a un fond qui forme une partie de la surface supérieure du toit et qui est substantiellement droit dans des coupes transversales par rapport au véhicule et/ou à la rainure. Maintenant il est supposé que le véhicule se trouve dans sa position normale où il est situé sur une surface plate et horizontale. Le fond de chaque rainure 3a peut alors avoir, par exemple, au moins une partie qui est à peu près horizontale dans une coupe transversale comme il est représenté sur les figures 1 et 2.

Le fond de chaque rainure 3a peut pourtant posséder aussi au moins une partie qui est un peu inclinée dans une coupe transversale. Comme il est dessiné sur la figure 3, le fond d'une rainure peut alors, par exemple, monter un peu vers l'axe longitudinal du toit 3. Les formes du toit 3 et des rainures de ce toit peuvent, par exemple, varier le long du toit de sorte que la même rainure 3a présente des parties différentes telles que dessinées sur les figures 2 et 3, respectivement. En plus, les formes des rainures peuvent naturellement être différentes pour des véhicules différents.

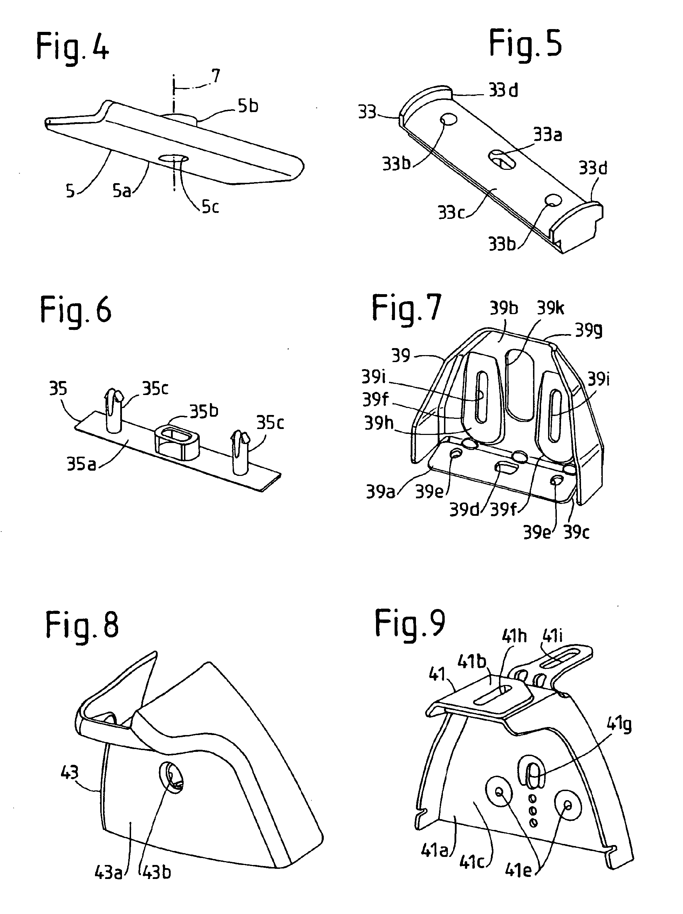

Le toit 3 du véhicule comporte des moyens de retenue qui sont arrangés de façon immobile sur le côté supérieur du toit 3 et permettent de fixer au moins une barre 13 et normalement au moins deux barres 13 d'un porte-charge 11 de façon détachable sur le toit. Les moyens de retenue du toit présentent des éléments de retenue 5 dont un est visible sur les figures 1, 2, 3 et séparément sur la figure 4. Chaque élément de retenue a une plaquette 5a dont la plus grande partie est plate et repose sur le fond d'une des rainures 3a du toit 3. Chaque élément de retenue 5 possède un tenon 5b qui est arrangé à peu près au milieu de la plaquette, dirigé de celle-ci vers le haut et pourvu d'un trou taraudé 5c. Ce trou taraudé 5c définit un axe 7 qui est perpendiculaire à la partie plate de la plaquette 5a et donc aussi à peu près perpendiculaire au fond de la partie de la rainure 3 où la plaquette est logée. Chacune des deux rainures 3a contient au moins deux éléments de retenue 5. En particulier si le véhicule consiste d'une camionnette, chaque rainure contient de préférence au moins quatre éléments de retenue 5. Les éléments de retenue 5 sont distribués le long des rainures 3a de sorte que chaque barre puisse être fixée à deux éléments de retenue dont chacun est situé dans une des rainures et que la barre soit alors transversale par rapport au véhicule. Les éléments de retenue sont fixés en permanence ainsi que de façon indétachable et immobile, par exemple soudés, à la plaque formant l'élément principal du toit 3. Les éléments de retenue 5 sont d'ailleurs normalement déjà fixés par le fabricant du véhicule.

Chaque barre 13 comprend une traverse 15 et deux pieds 31. La traverse 15 est substantiellement droite et possède un profilé 17 en métal, tel qu'un tube carré, une gaine 19 en matière plastique, deux corps de maintien 21 fixés aux extrémités du profilé 17 et un axe 25. La traverse 15 comporte, à proximité de chacune de ses extrémités, quelques trous 15a qui forment une rangée s'étendant dans la direction longitudinale de la traverse, pénètrent les parois inférieures du profilé 17, de la gaine 19 et du corps de maintien 21 et tiennent des écrous 23.

Chaque pied 31 présente, à son extrémité inférieure, une cale 33 représentée séparément sur la figure 5. La cale 33 peut être fixée à un des éléments de retenue 5, est oblongue dans la direction longitudinale de la rainure 3a logeant ledit élément de retenue et présente un trou 33a disposé au centre ainsi que deux trous 33b disposés aux côtés opposés du trou 33a. Le tenon 5b de l'élément de retenue 5 pénètre dans la partie inférieure et élargie du trou 33a. Le tenon 5b et le trou 33a sont oblongs dans la direction longitudinale de la rainure 3a. Un des bords longitudinaux de la plaquette 5 est arqué vers le haut. Ces caractéristiques assurent que la cale 33 est bien parallèle à la rainure 3a. La cale 33 comporte au côté supérieur une surface portante 33c et deux collets 33d dont chacun est disposé à une des extrémités de la surface portante et fait saillie au-delà de celle-ci vers le haut. La surface portante 33c est arquée, forme une section d'une surface cylindrique et définit un axe de pivot qui s'étend le long de la rainure 3a et donc aussi au moins approximativement dans la direction longitudinale du toit 3. Une semelle 35 est fixée à la cale 33 et représentée séparément sur la figure 6. La semelle 35 possède une plaquette 35a arrangée au côté inférieur de la cale 33, un tenon creux 35b pénétrant dans le trou 33a et deux doigts 35c encliquetés dans les trous 33b de la cale 33.

Chaque pied 31 comporte aussi un organe de liaison 37 qui relie la traverse 15 à la cale 33 et possède, comme éléments principaux, une patte 39, un support 41 et un capot 43. La patte 39 est représentée séparément sur la figure 7, consiste en tôle et possède une base 39a et une paroi 39b qui forme un angle avec la base et s'étend de celle-ci vers le haut. La base 39a a, au côté inférieur, une surface d'appui 39c qui est arquée, forme une section d'une surface cylindrique et prend appui sur la surface portante 33c de la cale 33. La base 39a a un trou 39d qui se trouve environ au milieu de la base et est, par exemple, en général quadrilatère avec des coins arrondis. La base présente en plus deux trous 39e qui sont disposés aux côtés opposés du trou 39d et oblongs dans une direction transversale à l'axe de la surface portante 39c. La paroi 39b est en grande partie plate, présente pourtant deux rampes 39f qui s'étendent du bas vers le haut et se trouvent sur des côtés opposés d'une ligne médiane de la paroi au côté de celle-ci qui est plus proche à la base 39a. La surface de la paroi 39f qui est plate et plus éloignée des rampes est désignée ci-après comme surface de contact 39g. Chaque rampe a une surface de rampe 39h qui est opposée au côté de la paroi formant la surface de contact 39g. Les surfaces de rampe 39h sont inclinées de sorte que la hauteur des rampes mesurée à partir de la partie plate de la paroi augmente vers le bas. Chaque rampe a un trou 39i qui est oblong et s'étend dans la direction longitudinale de la rampe du bas vers le haut. La partie plate de la paroi 39b a un trou 39k qui se trouve en partie entre les deux rampes, est aussi oblong et s'étend aussi du bas vers le haut.

Chaque pied 31 comprend des moyens de fixation 45 pour fixer la cale 33 à l'élément de retenue 5 et pour fixer l'organe de liaison 37 à la cale 33. Les moyens de fixation 45 comportent une plaquette de serrage 47, une vis 49 et une rondelle. La plaquette de serrage 47 repose sur la base 39a de la patte 39 et a un trou. La vis 49 a un boulon fileté qui pénètre à travers le trou de la plaquette de serrage 47, le trou 39d de la patte 39 et le trou 33a de la cale 33 et est vissé dans le trou taraudé 5c de l'élément de retenue 5. La tête de la vis 49 prend appui via la rondelle mentionnée sur la plaquette de serrage. Le trou 39d de la patte 39 présente, dans les coupes dessinées sur les figures 1 à 3, une dimension qui est distinctement plus grande que le diamètre du boulon de la vis 49. Lorsque la vis 45 est desserrée, la patte 39 peut donc être pivotée autour la surface portante 33c de la cale 33 et autour l'axe de pivot défini par la surface portante. La patte 39 peut être pivotée par rapport à la cale 5 dans une plage de pivotement qui est de préférence au moins 5° et, par exemple, environ 10° ou même plus. L'orientabilité de la patte permet d'adapter la position de la patte à la forme de la rainure 3a du toit 3 et à la direction de l'axe 7 de l'élément de retenue d'une façon désirée.

La patte peut, par exemple, être réglée de manière à ce que la partie plate de la paroi 39b de la patte soit verticale dans les coupes représentées sur les figures 2 et 3 pour un fond de rainure horizontal ou incliné. Si la vis 49 est serrée, elle presse la plaquette de serrage 47 contre la base 39a de la patte 39 et relie la patte de façon immobile et solide à la cale 33 et la dernière à l'élément de retenue 5 et donc au toit 3.

Le support 41 de l'organe de liaison 37 est représenté séparément sur la figure 9 et consiste en tôle. Le support possède une paroi 41a et une partie supérieure 41b qui a deux ailes coudées à des côtes opposés de la paroi 41a. La paroi 41a est en grande partie plate. La partie plate de la paroi 41a présente une surface de contact 41c qui est naturellement aussi plate et contacte la surface de contact 39g de la patte 39. La paroi 41a a, au côté détourné de la surface de contact 41c et de la patte 39, deux protubérances 41d dont chacune est attribuée à une des rampes 39f.

Chacune de ces protubérances 41d comprend un collet entourant un trou 41e qui est visible sur les figures 9 et 10. Ce trou 41e est circulaire ainsi que taraudé et définit un axe 51 qui est sensiblement perpendiculaire à la surface de rampe 39h de la rampe 39f attribuée. La paroi 41a a encore une bosse 41f qui est située au côté détourné de la patte 39 substantiellement au-dessus des protubérances 41d sur la ligne médiane de la paroi 41a, forme une rampe ayant une hauteur augmentant vers le haut et présente un trou oblong 41g s'étendent du bas vers le haut. La partie supérieure 41b du support 41 est pourvue de deux trous oblongs 41h et 41i qui s'étendent dans la direction longitudinale de la traverse 15.

Le support 41 est relié à la patte 39 par au moins un organe de connexion 53, à savoir par deux organes de connexion 53 dont chacun est attribué à une des rampes 39f. Chaque organe de connexion 53 comprend une vis 55 et une rondelle 57, la vis 55 a une tête et un boulon avec un filet extérieur. La tête de la vis prend appui via la rondelle 57 sur la surface de rampe 39h de l'une des rampes 39f. Le boulon de la vis 55 pénètre le trou oblong 39i de la rampe et est vissé dans le trou taraudé 41e qui est attribué à la rampe. Si les deux vis 55 sont desserrées, le support 41 peut glisser avec sa surface de contact 41c sur la surface de contact 39g de la patte 39. Le support peut donc être ajusté par rapport à la patte. Comme les trous oblongs 39a ont une longueur qui est bien plus grande que le diamètre des boulons des vis 55, on peut en particulier ajuster le niveau du support 41 mesuré à partir de la cale 33. Lors d'un changement de ce niveau, les boulons des vis 55 sont déplacés le long des trous oblongs 39i de la patte. Sur la figure 10, le support 41 se trouve presque dans sa plus haute position possible. Les trous oblongs 39i ont de préférence une largeur qui est un peu, par exemple environ un millimètre, plus grande que le diamètre des boulons des vis 55. Ceci permet, dans l'état desserré des vis 55, de pivoter le support 41 un peu par rapport à la patte 39 autour un axe qui est perpendiculaire aux surfaces de contact 39g et 41c et aussi sensiblement perpendiculaire à la direction longitudinale du véhicule et des rainures 3a.

Si les deux vis 55 sont serrées, elles relient le support de façon immobile à la patte 39. Comme la hauteur des rampes 39f augmente vers le bas, les rampes empêchent que le support glisse vers le bas même si chaque barre est chargée par une charge lourde. Les rampes servent donc comme antiglissement.

Le support 41 est relié à la traverse 15 de façon immobile, mais ajustable par deux vis 59 qui pénètrent à travers les trous oblongs 41h, 41i de la partie supérieure 41b du support et sont vissées dans deux des écrous 23 tenus dans les trous 15a de la traverse. Comme la traverse comporte, pour chaque pied 31, une rangée de trous ayant plus de deux trous et comme les trous 41h, 41i sont oblongs, les supports 41 des deux pieds peuvent être fixés au choix à distances différentes des extrémités de la traverse.

Le capot 43 est dessiné séparément sur la figure 8, consiste en matière plastique et possède une paroi 43a avec un trou 43b entouré d'un collet 43c. Ce collet 43c tient un dispositif de verrouillage 61. Celui-ci comporte un verrou 63 avec une broche qui pénètre à travers le trou oblong 39k de la patte 39 et à travers le trou 41g du support 41. Le verrou peut être tourné dans une position de verrouillage où il verrouille et fixe le capot 43 au support 41 ou dans une position de déverrouillage permettant d'enlever le capot. Le verrou 63 est, par exemple, configuré pour être actionné à l'aide d'une pièce de monnaie 65 dessinée en traits mixtes sur la figure 1 ou par un outil tel qu'on tournevis. Le dispositif de verrouillage peut cependant comporter une serrure à clé qui sert alors aussi comme antivol.

Chacun des deux corps de maintien 21 de la traverse 15 supporte un arrêt charge 71 qui est visible sur les figures 1, 11, 12, 13, peut être tourné autour l'axe 25 de la traverse et comporte une pièce principale 73 ainsi qu'une palette de verrouillage 75. La pièce principale a une broche pénétrant dans le corps de maintien et une tête 73a. Celle-ci présente une saillie 73b faisant saillie dans une direction transversale de la traverse. La face du corps de maintien 21 a au moins deux et, par exemple, quatre encoches 21a. La palette de verrouillage 75 est supportée de façon mobile, à savoir de façon pivotante, par la pièce principale 73 et comporte un ergot 75a pouvant pénétrer dans une des encoches 21a. L'arrêt charge 71 comporte au moins un ressort 77 qui prend appui sur la pièce principale 73 et sur la palette de verrouillage 75 et presse la dernière contre la face du corps de maintien 21 pour encliqueter l'ergot 75a dans une des encoches 21a comme il est illustré sur la figure 12. La palette de verrouillage 75 verrouille alors l'arrêt charge 71 et empêche celui-ci de se tourner par rapport à la traverse. La palette de verrouillage 75 peut être déclenchée manuellement contre la force du ressort 77 comme il est illustré sur la figure 13.

Si une personne déclenche la palette de verrouillage et ainsi tout l'arrêt charge, celui-ci peut être tourné autour l'axe 25 comme il est indiqué par des flèches sur la figure 11. La palette de verrouillage 75 peut être encliquetée dans au moins deux position différentes de l'arrêt charge 71 où la saillie 73b et dirigée sensiblement dans une direction verticale vers le bas ou sensiblement dans une direction verticale vers le haut comme il est dessiné en traits pleins et en traits mixtes, respectivement sur la figure 11. La position, où la saillie 73b est dirigée vers le haut, est désignée comme position d'arrêt. Dans cette position, la saillie empêche plus ou moins qu'une charge portée du porte-charge 11 glisse vers un des côtés du véhicule au-delà de l'arrêt charge. La position de l'arrêt charge, où la saillie est dirigée vers le bas, est désignée comme position de libération. Cette position facilite de mettre une charge sur le porte-charge ou d'enlever cette charge. La palette de verrouillage peut, par exemple encore être encliquetée dans deux positions intermédiaires de l'arrêt charge où la saillie 73b est dirigée dans une direction sensiblement horizontale vers l'un ou l'autre côté de la traverse comme il est aussi dessiné en traits mixtes sur la figure 11.

Il va de soi que nombreuses modifications pourraient être faites. La surface portante de la cale 33 et la surface d'appui de la patte 39 pourraient, par exemple, former des parties de surfaces sphériques au lieu de surfaces cylindriques. Ça permettrait de pivoter la patte autour le centre de la sphère définie par les surfaces sphériques. En outre, chaque élément de retenue pourrait comprendre en boulon fileté au lieu d'un trou taraudé. Ce boulon pourrait pénétrer le trou 33a de la cale 33 et le trou 39d de la patte 39. Les moyens de fixation des pieds comprendront alors un écrou pouvant être vissé sur le boulon fileté. La vis 55 pourrait être remplacée par un boulon fileté et un écrou. Par surcroît, la rampe de la patte 39 pourrait éventuellement être remplacée par une rampe du support 41. Cette rampe aurait alors un trou oblong et une surface de rampe qui s'éloigne du bas vers le haut des surfaces de contact.

## Revendications

1. Barre pour être fixée sur un toit (3) d'un véhicule automobile (1), notamment d'une camionnette et/ou d'une voiture particulière, avec une traverse (15) et deux pieds (31) reliés à la traverse (15), chaque pied (31) comportant une cale (33) destinée à être fixée sur le côté supérieur du toit (3) et un organe de liaison (37) relié à la traverse (15) et à la cale (33), la cale (33) ayant une surface portante (33c), l'organe de liaison (37) ayant une surface d'appui (39c) et prenant appui avec celle-ci sur la surface portante (33c) de la cale (33), la surface portante (33c) ainsi que la surface d'appui (39c) étant arquées de manière à ce que l'organe de liaison (37) puisse être pivoté par rapport à la cale (33) et que l'organe de liaison (37) puisse être fixé dans des positions différentes à la cale (33), et la traverse (15) présentant deux extrémités, **caractérisée en ce que** la traverse (15) supporte, à chacune de ses extrémités, un arrêt charge (71) avec une saillie (73b) faisant saillie dans une direction transversale de la traverse (15) et que chacun des deux arrêts charge (71) est pivotant et configuré pour être bloqué dans une position d'arrêt où la saillie (73b) est dirigée vers le haut et pour être pivoté et bloqué dans au moins une autre position où la saillie (73b) est dirigée vers le bas ou vers un des côtés de la traverse (15).

2. Barre selon la revendication 1, **caractérisée en ce que** la cale (33) de chaque pied (31) comprend un trou (33a), que chaque pied (31) comprend des moyens de fixation (45), que les moyens de fixation (45) comportent au moins une vis (49) qui pénètre à travers le ou un trou (33a) de la cale (33) et est formée pour être vissée dans un trou taraudé (5c) d'un élément de retenue (5) arrangé au côté supérieur du toit (3) ou que les moyens de fixation (45) comportent au moins un écrou formé pour être vissé sur un boulon qui a un filet extérieur, est fixé au côté supérieur du toit (3) et pénètre le ou un trou (33a) de la cale (33).

3. Barre selon la revendication 1 ou 2, **caractérisée en ce que** la surface portante (33c) de la cale (33) et la surface d'appui (39c) de l'organe de liaison (39) forment des sections de surfaces cylindriques et que la surface portante (33c) définit un axe de pivot arrangé pour s'étendre au moins approximativement dans la direction longitudinale du toit (3) si le pied (31) est fixé sur le toit (3).

4. Barre selon l'une quelconque des revendications 1 à 3, **caractérisée en ce que** l'organe de liaison (37) possède une patte (39) fixée à la cale (33) et un support (41) qui est fixé à la traverse (15) et relié à la patte (39) de façon ajustable par au moins un organe de connexion (53) et, par exemple, par deux organes de connexion (53), que le ou chaque organe de connexion (53) comporte une vis (55) avec une tête et avec un boulon ayant un filet extérieur ou que le ou chaque organe de connexion (53) comporte un boulon avec un filet extérieur et un écrou vissé sur le boulon, que le boulon de l'organe de connexion (53) ou de chaque organe de connexion (53) possède une section de boulon qui pénètre à travers un trou (39i) de la patte (39) ou du support (41), que ce trou (39i) a, au moins dans une direction, une dimension qui est plus grande que la dimension transversale de ladite section de boulon mesurée dans la même direction de manière à ce que le boulon puisse être déplacé dans une direction sensiblement transversale à lui-même pour ajuster le support (41) par rapport à la patte (39) si l'organe de connexion (53) ou chaque organe de connexion (53) reliant le support (41) à la patte (39) est desserré.

5. Barre selon la revendication 4, **caractérisée en ce que** le niveau du support (41) mesuré à partir de la cale (33) est ajustable par rapport à la patte (39), que la patte (39) et le support (41) se contactent avec des surfaces de contact (39g, 41c) si le support (41) est fixé à la patte (39), que ledit trou (39i) ou chacun desdits trous (39i) de la patte (39) ou du support (41) est arrangé dans une rampe (39f) de la patte (39) ou du support (41), respectivement, que la rampe (39f) présente une surface de rampe (39h), que la tête ou l'écrou de l'organe de connexion (53) ou de chaque organe de connexion (53) prend appui contre la surface de rampe (39h) et que la surface de rampe (39h) est inclinée par rapport aux surfaces de contact (39g, 41c) du haut en bas de manière à ce que la surface de rampe (39h) s'éloigne de haut vers le bas des surfaces de contact (39g, 41c) si la rampe (39h) appartient à la patte (39) ou que la surface de rampe s'éloigne des surfaces de contact (39g, 41c) si la rampe appartient au support (41).

6. Barre selon la revendication 4 ou 5, **caractérisée en ce que** le support (41) est formé pour être pivoté, lors d'un ajustage, relatif à la patte (39) autour d'un axe qui est sensiblement perpendiculaire aux surfaces de contact (39g, 41c).

7. Barre selon l'une quelconque des revendications 1 à 6,
**caractérisée en ce que** chaque arrêt charge (71) comprend une pièce principale (73), une palette de verrouillage (75) supportée de façon mobile, par exemple de façon pivotante, par la pièce principale (73) et au moins un ressort (77) prenant appui sur la pièce principale (73) et la palette de verrouillage (75) et que la traverse (15), la pièce principale (73) et la palette de verrouillage (75) sont configurées de sorte que la palette de verrouillage (75) puisse s'encliqueter dans la traverse (15) lorsque l'arrêt charge (71) se trouve dans ladite position d'arrêt ou dans ladite au moins une autre position et puisse être déclenchée contre la force appliquée du ressort (77) ou des ressorts.

## Claims

1. Bar for fastening to a roof (3) of a motor vehicle (1), especially a van and/or a private car, with a crosspiece (15) and two feet (31) which are connected to said crosspiece (15), each foot (31) comprising a wedge (33), which is intended to be fastened to the upper side of the roof (3), and a linking component (37) which is connected to the crosspiece (15) and to the wedge (33), said wedge (33) having a supporting surface (33c), the linking component (37) having a bearing surface (39c) and resting, via the latter, on the supporting surface (33c) of the wedge (33), said supporting surface (33c) and also the bearing surface (39c) being arched in such a way that the linking component (37) can be pivoted in relation to the wedge (33) and that said linking component (37) can be fastened in different positions to the wedge (33), and the crosspiece (15) having two ends, **characterised in that** the crosspiece (15) supports, at each of its ends, a load stop (71) with a projection (73b) which projects in a transverse direction of the crosspiece (15); and that each of the two load stops (71) pivots and is configured so as to be immobilised in a stop position in which the projection (73b) is directed upwards and so as to be pivoted into, and immobilised in, at least one other position in which the projection (73b) is directed downwards or towards one of the sides of the crosspiece (15).

2. Bar according to claim 1, **characterised in that** the wedge (33) on each foot (31) comprises a hole (33a); that each foot (31) comprises fastening means (45); that said fastening means (45) comprise at least one screw (49) which passes through the hole (33a), or a hole (33a), in the wedge (33) and is formed so as to be screwed into a threaded hole (5c) in a retaining element (5) arranged at the upper side of the roof (3); or that the fastening means (45) comprise at least one nut which is formed so as to be screwed onto a bolt which has an external thread, is fastened to the upper side of the roof (3) and passes through the hole (33a), or a hole (33a), in the wedge (33).

3. Bar according to claim 1 or 2, **characterised in that** the supporting surface (33c) on the wedge (33) and the bearing surface (39c) on the linking component (37) form sections of cylindrical surfaces; and that the supporting surface (33c) defines an axis of pivoting which is arranged so as to extend, at least approximately, in the longitudinal direction of the roof (3) if the foot (31) is fastened to said roof (3).

4. Bar according to any of claims 1 to 3, **characterised in that** the linking component (37) possesses a bracket (39), which is fastened to the wedge (33), and a support (41) which is fastened to the crosspiece (15) and connected to the bracket (39) in an adjustable manner by at least one connecting component (53) and, for example, by two connecting components (53); that said connecting component (53), or each connecting component (53), comprises a screw (55) with a head and with a bolt having an external thread; or that the connecting component (53), or each connecting component (53), comprises a bolt with an external thread and a nut which is screwed onto said bolt; that the bolt of the connecting component (53), or of each connecting component (53), possesses a bolt section which passes through a hole (39i) in the bracket (39) or in the support (41); and that the said hole (39i) has, at least in one direction, a dimension which is larger than the transverse dimension of the said bolt section, measured in the same direction, in such a way that the bolt can be displaced in a direction substantially transverse to itself in order to adjust the support (41) in relation to the bracket (39) if the connecting component (53), or each connecting component (53), which connects the support (41) to the bracket (39) is loosened.

5. Bar according to claim 4, **characterised in that** the level of the support (41), measured from the wedge (33), is adjustable in relation to the bracket (39); that said bracket (39) and the support (41) make contact with one another via contact surfaces (39g, 41c) if the support (41) is fastened to the bracket (39); that the said hole (39i), or each of the said holes (39i), in the bracket (39) or in the support (41) is arranged in a ramp (39f) on the bracket (39) or on the support (41), respectively; that the ramp (39f) has a ramp surface (39h); that the head or the nut of the connecting component (53), or of each connecting component (53), rests against the ramp surface (39h); and that said ramp surface (39h) is inclined in relation to the contact surfaces (39g, 41c) from the top towards the bottom in such a way that the ramp surface (39h) moves away from the contact surfaces (39g, 41c) from the top towards the bottom if the ramp (39h) belongs to the bracket (39), or that the ramp surface moves away from the contact surfaces (39g, 41c) if the ramp belongs to the support (41).

6. Bar according to claim 4 or 5, **characterised in that** the support (41) is formed so as to be pivoted, when an adjustment is carried out, relative to the bracket (39) about an axis which is substantially perpendicular to the contact surfaces (39g, 41c).

7. Bar according to any of claims 1 to 6, **characterised in that** each load stop (71) comprises a main piece (73), a locking blade (75) which is supported in a movable manner, for example a pivoting manner, by said main piece (73) and at least one spring (77) which rests on said main piece (73) and on the locking blade (75); and that the crosspiece (15), the main piece (73) and the locking blade (75) are configured in such a way that the locking blade (75) is able to latch into the crosspiece (15) when the load stop (71) is in the said stop position or in the said, at least one, other position, and can be disengaged against the applied force of the spring (77) or springs.

## Patentansprüche

1. Schiene zur Befestigung an einem Dach (3) eines Kraftfahrzeugs (1), insbesondere eines Kleinlastwagens und/oder eines Personenkraftwagens, einen Querträger (15) und zwei mit dem Querträger (15) verbundene Füße (31) aufweisend, wobei jeder Fuß (31) einen Keil (33) umfasst, der zur Befestigung an der Oberseite des Daches (3) vorgesehen ist, sowie ein mit dem Querträger (15) und dem Keil (33) verbundenes Verbindungsglied (37), wobei der Keil (33) eine Stützfläche (33c) hat und das Verbindungsglied (37) eine Anlagefläche (39c) aufweist und sich mit dieser an der Stützfläche (33c) des Keils (33) abstützt, wobei die Stützfläche (33c) ebenso wie die Anlagefläche (39c) derart gebogen ist, dass das Verbindungsglied (37) gegenüber dem Keil (33) schwenkbar ist und das Verbindungsglied (37) in unterschiedlichen Positionen an dem Keil (33) fixierbar ist und wobei der Querträger (15) zwei Enden aufweist, **dadurch gekennzeichnet, dass** der Querträger (15) an jedem seiner Enden eine Lastensicherung (71) mit einem in eine Querrichtung zum Querträger (15) hinausragenden Fortsatz (73b) trägt und dass jede der beiden Lastensicherungen (71) schwenkbar ist und dazu ausgelegt, in einer Arretierstellung, in welcher der Fortsatz (73b) nach oben gerichtet ist, blockierbar zu sein und in wenigstens eine weitere Position, in welcher der Fortsatz (73b) nach unten oder zu einer Seite des Querträgers (15) gerichtet ist, verschwenkbar und blockierbar zu sein.

2. Schiene nach Anspruch 1, **dadurch gekennzeichnet, dass** der Keil (33) jedes Fußes (31) eine Bohrung (33a) umfasst, dass jeder Fuß (31) Befestigungsmittel (45) umfasst, dass die Befestigungsmittel (45) mindestens eine Schraube (49) umfassen, die durch die oder eine Bohrung (33a) des Keils (33) greift und zum Eindrehen in ein Gewindeloch (5c) eines an der Oberseite des Dachs (3) angeordneten Halteelements (5) ausgebildet ist, oder dass die Befestigungsmittel (45) mindestens eine Schraubenmutter umfassen, die zum Aufschrauben auf einen Bolzen ausgebildet ist, der ein Außengewinde aufweist, an der Oberseite des Daches (3) befestigt ist und die oder eine Bohrung (33a) des Keils (33) durchgreift.

3. Schiene nach Anspruch 1 oder 2, **dadurch gekennzeichnet, dass** die Stützfläche (33c) des Keils (33) und die Anlagefläche (39c) des Verbindungsglieds (39) zylindrische Flächenabschnitte bilden und dass die Stützfläche (33c) eine Schwenkachse definiert, die dazu ausgelegt ist, sich zumindest annähernd in Längsrichtung des Dachs (3) zu erstrecken, wenn der Fuß (31) an dem Dach (3) befestigt ist.

4. Schiene nach einem der Ansprüche 1 bis 3, **dadurch gekennzeichnet, dass** das Verbindungsglied (37) eine an dem Keil (33) befestigte Halterung (39) besitzt und eine Stütze (41), die an dem Querträger (15) befestigt und mit der Stütze (39) durch mindestens ein Anschlussglied (53) und beispielsweise durch zwei Anschlussglieder (53) verstellbar verbunden ist, dass das oder jedes Anschlussglied (53) eine Schraube (55) mit einem Kopf und einem Außengewindebolzen umfasst oder dass das oder jedes Anschlussglied (53) einen Bolzen mit Außengewinde und einer auf den Bolzen aufgeschraubten Schraubenmutter umfasst, dass der Bolzen des Anschlussglieds (53) oder jedes Anschlussglieds (53) einen Bolzenabschnitt umfasst, der eine Bohrung (39i) der Halterung (39) oder der Stütze (41) durchdringt, dass diese Bohrung (39i) zumindest in einer Richtung eine Abmessung aufweist, die größer als die Querabmessung des in derselben Richtung gemessenen Bolzenabschnitts ist, so dass der Bolzen in eine im Wesentlichen quer zu sich selbst verlaufende Richtung bewegbar ist, um die Stütze (41) gegenüber der Halterung (39) zu verstellen, wenn das Anschlussglied (53) oder jedes Anschlussglied (53), welches die Stütze (41) mit der Halterung (39) verbindet, gelöst ist.

5. Schiene nach Anspruch 4, **dadurch gekennzeichnet, dass** das vom Keil (33) aus gemessene Niveau der Stütze (41) bezogen auf die Halterung (39) verstellbar ist, dass die Halterung (39) und die Stütze (41) sich mit Kontaktflächen (39g, 41c) berühren, wenn die Stütze (41) an der Halterung (39) befestigt ist, dass die Bohrung (39i) oder jede der Bohrungen (39i) der Halterung (39) oder der Stütze (41) in einer Rampe (39f) der Halterung (39) oder der Stütze (41) angeordnet ist, bzw. dass die Rampe (39f) eine Rampenfläche (39h) aufweist, dass der Kopf oder die Schraubenmutter des Anschlussglieds (53) oder jedes Anschlussglieds (53) zur Anlage an die Rampenfläche (39h) kommt und dass die Rampenfläche (39h) bezogen auf die Kontaktflächen (39g, 41c) derart von oben nach unten geneigt ist, dass sich die Rampenfläche (39h) von oben nach unten von den Kontaktflächen (39g, 41c) entfernt, wenn die Rampe (39h) [sic] zu der Halterung (39) gehört oder dass sich die Rampenfläche von den Kontaktflächen (39g, 41c) entfernt, wenn die Rampe zu der Stütze (41) gehört.

6. Schiene nach Anspruch 4 oder 5, **dadurch gekennzeichnet, dass** die Stütze (41) so ausgebildet ist, dass sie bei einem Verstellen bezogen auf die Halterung (39) um eine im Wesentlichen senkrecht zu den Kontaktflächen (39g, 41c) verlaufende Achse schwenkbar ist.

7. Schiene nach einem der Ansprüche 1 bis 6, **dadurch gekennzeichnet, dass** jede Lastensicherung (71) einen Hauptteil (73), eine von dem Hauptteil (73) beweglich, beispielsweise schwenkbar, abgestützte Verriegelungsfahne (75) und mindestens eine sich über den Hauptteil (73) und die Verriegelungsfahne (75) abstützende Feder (77) umfasst und dass der Querträger (15), der Hauptteil (73) und die Verriegelungsfahne (75) so eingerichtet sind, dass die Verriegelungsfahne (75) in den Querträger (15) einrastbar ist, wenn die Lastensicherung (71) sich in der Arretierstellung oder in der mindestens einen weiteren Position befindet und gegen die anliegende Kraft der Feder (77) oder der Federn ausrastbar ist.
